# EUROPEAN PATENT APPLICATION

(11) **EP 2 129 157 A1**
(43) Date of publication of application: **02.12.2009**
(21) Application number: 08721930.9
(22) Date of filing: 12.03.2008
(51) Int. Cl.: H04Q 7/38, H04L 1/16

(54) **BASE STATION DEVICE, MOBILE STATION, RADIO COMMUNICATION SYSTEM, AND COMMUNICATION CONTROL METHOD**

(30) Priority: 19.03.2007 JP 2007071594
(71) Applicant: NTT DoCoMo, Inc., Chiyoda-ku Tokyo 100-6150 (JP)
(72) Inventor: ISHII, Hiroyuki, Tokyo 100-6150 (JP); MIKI, Nobuhiko, Tokyo 100-6150 (JP); UMESH, Anil, Tokyo 100-6150 (JP)
(74) Representative: HOFFMANN EITLE
(86) International application number: PCT/JP2008/054514
(87) International publication number: WO 2008/120544

(57) **Abstract**

In a radio communication system including a mobile station and a base station apparatus communicating with the mobile station, the base station apparatus applies a scheduling scheme for assigning radio resources to mobile stations for each constant period, and the mobile station transmits a first signal to the base station apparatus in accordance with the assignment of the radio resources. The base station apparatus includes a decoding unit configured to decode the first signal, and a transmitting unit configured to transmit a control signal for retransmitting the first signal to the mobile station if the first signal has not been successfully received.

## Description

### TECHNICAL FIELD

The present invention relates to a radio communication system and more particularly relates to a base station apparatus, a mobile station, a radio communication system and a communication control method.

### BACKGROUND ART

A communication scheme serving as a successor of W-CDMA and HSDPA, that is, a LTE system has been and is being discussed by a W-CDMA standardization organization 3GPP. In the LTE system, an OFDM (Orthogonal Frequency Division Multiplexing) scheme and a SC-FDMA (Single-Carrier Frequency Division Multiple Access) scheme are being investigated as downlink and uplink radio access schemes, respectively. See 3GPP TR 25.814 (V7.0.0), "Physical Layer Aspects for Evolved UTRA", June 2006, for example.

In the OFDM scheme, a frequency band is segmented into multiple smaller frequency bands (subcarriers), and data is carried and transmitted over the individual subcarriers. According to the OFDM scheme, the subcarriers are densely arranged on the frequency band in such a manner that the subcarriers are partially overlapped with each other without mutual interference, resulting in fast transmission and highly efficient utilization of the frequency band.

In the SC-FDMA scheme, a frequency band is segmented, and different frequency bands are used among multiple terminals for transmission, resulting in reduced interference among the terminals. According to the SC-FDMA scheme, variations in transmit power are reduced, resulting in lower power consumption for the terminals and wider coverage.

In the LTE system, one or more physical channels for uplinks and downlinks are shared among multiple mobile stations for communications. The channels shared among the mobile stations are commonly called shared channels, which serve as a physical uplink shared channel (PUSCH) for uplinks and a physical downlink shared channel (PDSCH) for downlinks in the LTE system. Also, the shared channels are used as an uplink shared channel (UL-SCH) for uplinks and a downlink shared channel (DL-SCH) for downlinks as transport channels.

In a communication system using the above-mentioned shared channels, it is necessary to signal which mobile stations are assigned the shared channels for each subframe (which has 1 ms and may be called a transmission time interval (TTI)). In the LTE system, a control channel used for the signaling may be referred to as a physical downlink control channel (PDCCH) or a downlink (DL) L1/L2 control channel. Also, the physical downlink control channel is used to signal transmit power control commands and acknowledgement information for uplink shared channels.

The physical downlink control channel may be used to transmit information such as a downlink L1/L2 control channel format indicator, downlink scheduling information, acknowledgement information (ACK/NACK), an uplink scheduling grant, an overload indicator and a transmit power control command bit. See R1-070103, "Downlink L1/L2 Control Signaling Channel Structure: Coding", for example. The downlink L1/L2 control channel format indicator may be referred to as a physical control format indicator channel (PCFICH). The acknowledgment information (ACK/NACK) may be referred to as a physical hybrid ARQ indicator channel (PHICH). The PCFICH and PHICH may be defined as separate physical channels being not included in the PDCCH and being provided in parallel with the PDCCH.

Also, the downlink scheduling information may include information such as assignment information of downlink resource blocks for the downlink shared channel, IDs for mobile stations or UEs, the number of streams, precoding vector information, a data size, a modulation scheme and HARQ (Hybrid Automatic Repeat Request) information. The downlink scheduling information may be referred to as downlink assignment information or a downlink scheduling grant. Also, the uplink scheduling grant may include assignment information of uplink resource blocks for the uplink shared channels, IDs for mobile stations or UEs, a data size, a modulation scheme, uplink transmit power information and demodulation reference signal information. The downlink scheduling information and the uplink scheduling grant may be collectively referred to as downlink control information (DCI).

Also in the LTE, HARQ is applied to a MAC layer for communications using the shared channels. For example, in downlinks, a mobile station decodes the downlink shared channels and transmits acknowledgement information to a base station apparatus based on the decoding result (CRC check result) over an uplink control channel. Then, the base station apparatus controls retransmission corresponding to the acknowledgement information. The acknowledgement information may be represented as a positive response (ACK) indicative of successful reception of transmitted signals or a negative response (NACK) indicative of unsuccessful reception of the transmitted signals. On the other hand, in uplinks, the base station apparatus decodes the uplink shared channels and transmits acknowledgement information to the mobile station based on the decoding result over a downlink control channel. Then, the mobile station controls retransmission corresponding to the acknowledgement information. The acknowledgement information may be represented as a positive response (ACK) indicative of successful reception of transmitted signals or a negative response (NACK) indicative of unsuccessful reception of the transmitted signals.

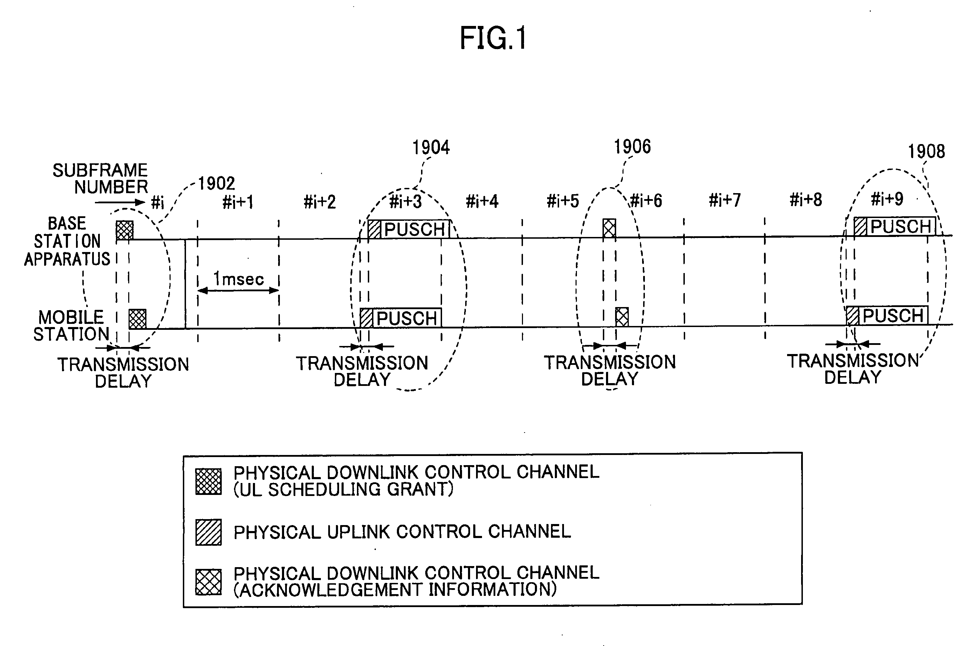

FIG. 1 illustrates an exemplary HARQ operation for uplinks. At 1902 (subframe #i (i>0)), a base station apparatus uses an uplink scheduling grant in a physical downlink control channel to instruct a mobile station to conduct communications in subframe #i+3 in an uplink shared channel. Then, the mobile station transmits the uplink shared channel to the base station apparatus at 1904 (subframe #i+3). The base station apparatus receives the uplink shared channel and attempts to decode it.

Then, at 1906 (subframe #i+6), the base station apparatus transmits acknowledgment information to the mobile station based on the decoding result. If the acknowledgement information is NACK, the mobile station retransmits the uplink shared channel at 1908 (subframe #i+9). In the above-mentioned uplink HARQ, the physical downlink control channel for transmitting the acknowledgment information corresponds to the above-mentioned acknowledgement information being one of the information items transmitted in the physical downlink control channel. Here, it is being discussed that determination as to which mobile station the acknowledgment information is for may be based on identification of a mobile station to which the uplink scheduling grant in the physical downlink control channel has been transmitted. Specifically, it is being discussed that the acknowledgement information and the uplink scheduling grant in the physical downlink control channel are separately numbered and the number of the acknowledgement information is associated one-to-one with the number of the uplink scheduling grant in the physical downlink control channel in order to determine which mobile station the acknowledgement information is for.

Referring to the temporal relationship illustrated in FIG. 1, at 1906, the base station apparatus transmits the acknowledgement information numbered as "n" to the mobile station transmitting the uplink scheduling grant numbered as "n" at 1902 in the physical downlink control channel. The number may be determined based on subcarriers, OFDM symbols or resource numbers to which the acknowledgement information or the uplink scheduling grant is mapped. See R1-070195, "ACK/NACK Signal Structure in E-UTRA Downlink", January 2007, for example.

In the LTE, a scheduling scheme of assigning radio resources for each constant period is proposed instead of a best effort type scheduling scheme of dynamically assigning the radio resources for user data transmitted at a constant transmission rate such as VoIP and streaming data. See R1-060099, "Persistent Scheduling for E-UTRA", January 2006, for example. This scheduling scheme may be referred to as a persistent scheduling, for example.

The uplink HARQ for user data to which the persistent scheduling is applied is described below.

It is being discussed that radio resources are assigned for each period to the persistent scheduling applied user data and that the assigned radio resources and transmit formats are specified in advance in RRC messages or others. In this case, the radio resources and transmit formats do not have to be specified in the uplink scheduling grant in the physical downlink control channel. Thus, the uplink scheduling grant would not be transmitted for the persistent scheduling applied user data. As a result, a problem arises that the determination scheme cannot be applied for determining which mobile station the acknowledgement information is for by associating the number of the acknowledgement information with the number of the uplink scheduling grant in the physical downlink control channel.

### DISCLOSURE OF INVENTION

### [PROBLEM TO BE SOLVED BY THE INVENTION]

On the other hand, some problems presented below may arise in the above-mentioned background art.

As stated above, the uplink scheduling grant is not applied to the persistent scheduling applied user data. In this case, the scheme of associating the number of the acknowledgement information with the number of the uplink scheduling grant in a one-to-one manner cannot be applied. Thus, the base station apparatus could not transmit the acknowledgment information to the mobile station for the persistent scheduling applied user data.

The present invention addresses the above-mentioned problem. One object of the present invention is to provide a base station apparatus, a mobile station, a radio communication system and a communication control method where the HARQ can be efficiently performed on the persistent scheduling applied user data.

### [MEANS FOR SOLVING THE PROBLEM]

In order to overcome the above problems, one aspect of the present invention relates to a base station apparatus in a radio communication system including a mobile station and the base station apparatus communicating with the mobile station, wherein the base station apparatus applies a scheduling scheme for assigning radio resources to mobile stations for each constant period, and wherein the mobile station transmits a first signal to the base station apparatus in accordance with the assignment of the radio resources, the base station apparatus including: a decoding unit configured to decode the first signal; and a transmitting unit configured to transmit a control signal for retransmitting the first signal to the mobile station if the first signal has not been successfully received.

Another aspect of the present invention relates to a mobile station in a radio communication system including the mobile station and a base station apparatus communicating with the mobile station, wherein the base station apparatus applies a scheduling scheme for assigning radio resources to mobile stations for each constant period, the mobile station including: a transmitting unit configured to transmit a first signal to the base station apparatus in accordance with the assignment of the radio resources; and a retransmitting unit configured to retransmit the first signal if a control signal for retransmitting the first signal is received from the base station apparatus.

Another aspect of the present invention relates to a radio communication system including a mobile station and a base station apparatus communicating with the mobile station, wherein the base station apparatus applies a scheduling scheme for assigning radio resources to mobile stations for each constant period, the mobile station including: a transmitting unit configured to transmit a first signal to the base station apparatus in accordance with the assignment of the radio resources; and a retransmitting unit configured to retransmit the first signal if a control signal for retransmitting the first signal is received from the base station apparatus, and the base station apparatus including: a decoding unit configured to decode the first signal; and a transmitting unit configured to transmit the control signal for retransmitting the first signal to the mobile station if the first signal has not been successfully received.

Another aspect of the present invention relates to a communication control method for use in a radio communication system including a mobile station and a base station apparatus communicating with the mobile station, wherein the base station apparatus applies a scheduling scheme for assigning radio resources to mobile stations for each constant period, the method including: the mobile station transmitting a first signal to the base station apparatus in accordance with the assignment of the radio resources; the base station apparatus decoding the first signal; the base station apparatus transmitting a control signal for retransmitting the first signal to the mobile station if the first signal has not been successfully received; and the mobile station retransmitting the first signal based on the control signal.

### [ADVANTAGE OF THE INVENTION]

According to the embodiments of the present invention, it is possible to provide a base station apparatus, a mobile station, a radio communication system and a communication control method that can efficiently perform HARQ operations on persistent scheduling applied user data.

### BRIEF DESCRIPTION OF DRAWINGS

FIG. 1 illustrates a temporal relationship of uplink HARQ operations at a mobile station and a base station apparatus;
FIG. 2 is a block diagram illustrating an exemplary arrangement of a radio communication system according to one embodiment of the present invention;
FIG. 3 illustrates an exemplary arrangement of an uplink scheduling grant in a physical downlink control channel and the channel-encoded uplink scheduling grant;
FIG. 4 illustrates exemplary operations at a mobile station and a base station apparatus in HARQ operations on persistent scheduling applied user data according to one embodiment of the present invention;
FIG. 5 illustrates exemplary operations at a mobile station and a base station apparatus in HARQ operations on persistent scheduling applied user data according to one embodiment of the present invention;
FIG. 6 is a partial block diagram illustrating a mobile station according to one embodiment of the present invention;
FIG. 7 is a partial block diagram illustrating a baseband signal processing unit of the mobile station according to one embodiment of the present invention;
FIG. 8 is a partial block diagram illustrating a base station apparatus according to one embodiment of the present invention;
FIG. 9 is a partial block diagram illustrating a baseband signal processing unit of the base station apparatus according to one embodiment of the present invention;
FIG. 10 is a flow diagram illustrating a communication control method for a mobile station according to one embodiment of the present invention; and
FIG. 11 is a flow diagram illustrating a communication control method for a base station apparatus according to one embodiment of the present invention.

### LIST OF REFERENCE SYMBOLS

- 50:: cell
- 100₁,: 100₂, 100₃, 100ₙ: mobile station
- 102:: transmit and receive antenna
- 104:: amplification unit
- 106:: transmitting and receiving unit
- 108:: baseband processing unit
- 110:: application unit
- 1081:: layer 1 processing unit
- 1082:: MAC processing unit
- 1083:: RLC processing unit/buffer unit
- 200:: base station apparatus
- 202:: transmit and receive antenna
- 204:: amplification unit
- 206:: transmitting and receiving unit
- 208:: baseband signal processing unit
- 210:: call processing unit
- 212:: channel interface
- 2081:: layer 1 processing unit
- 2082:: MAC processing unit
- 2083:: RLC processing unit
- 300:: access gateway apparatus
- 400:: core network

### BEST MODE FOR CARRYING OUT THE INVENTION

Embodiments of the present invention are described below with reference to the accompanying drawings. Throughout the drawings, the same reference symbols are used for elements having the same function and are not repeatedly described.

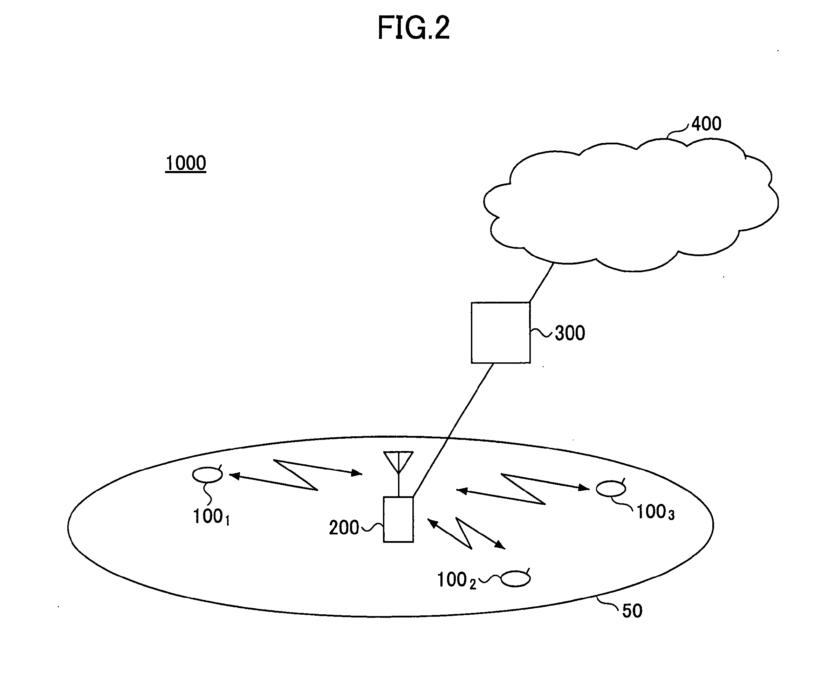

A radio communication system having a mobile station and a base station apparatus according to one embodiment of the present invention is described with reference to FIG. 2.

A radio communication system 1000 is a system to which Evolved UTRA and UTRAN (which may also be referred to as Long Term Evolution (LTE) or Super 3G) may be applied. The radio communication system 1000 includes a base station apparatus (eNB: eNode B) 200 and multiple mobile stations 100ₙ (100₁, 100₂, 100₃, ..., 100ₙ (n>0)) communicating with the base station apparatus 200. The base station apparatus 200 is coupled to an upper station such as an access gateway apparatus 300, which is in turn coupled to a core network 400. The mobile stations 100ₙ are communicating with the base station apparatus 200 in a cell 50 in accordance with the Evolved UTRA and UTRAN.

The mobile stations (100₁, 100₂, 100₃, ..., 100ₙ) have the same arrangement, function and state and accordingly are described below as the mobile station 100ₙ unless specifically stated otherwise. For convenience, the mobile stations wirelessly communicate with the base station apparatus. More generally, the mobile stations may be user apparatuses or user equipment (UE) including mobile terminals and fixed terminals.

In the radio communication system 1000, the OFDM (Orthogonal Frequency Division Multiplexing) and the SC-FDMA (Single Carrier-Frequency Division Multiple Access) are applied as radio access schemes to downlinks and uplinks, respectively. As stated above, the OFDM is a multiple carrier type of transmission scheme where a frequency band is divided into multiple smaller frequency bands (subcarriers) and data is mapped into the individual subcarriers for communications. The SC-FDMA is a single carrier type of transmission scheme where a frequency band is divided for individual terminals and the terminals use mutually different frequency bands to reduce inter-terminal interference.

Communication channels in the Evolved UTRA and UTRAN are described.

For downlinks, a physical downlink shared channel (PDSCH) shared among the mobile stations 100ₙ and a physical downlink control channel (PDCCH) are used. The physical downlink control channel may also be referred to as a downlink L1/L2 control channel. User data is transmitted over the physical downlink shared channel. Also, a downlink (DL) L1/L2 control channel format indicator, downlink scheduling information, acknowledgement information (ACK/NACK), an uplink scheduling grant, an overload indicator, a transmit power control command bit and others may be transmitted over the physical downlink control channel. The downlink L1/L2 control channel format indicator may also be referred to as a physical control format indicator channel (PCFICH).

The downlink scheduling information may include an ID for a user communicating over a physical downlink shared channel, transport format information for that user, that is, a data size, a modulation scheme and HARQ information, and downlink resource block assignment information, for example.

The uplink scheduling grant may include an ID for a user communicating over a physical uplink shared channel, transport format information for that user, that is, a data size and a modulation scheme, uplink resource block assignment information and transmit power for uplink shared channels, for example. The uplink resource blocks may correspond to frequency resources and also be referred to as resource units.

The downlink scheduling information and the uplink scheduling grant may be collectively referred to as downlink control information (DCI).

The acknowledgement information (ACK/NACK) is acknowledgement information for uplink shared channels. The acknowledgement information may also be referred to as a physical HARQ indicator channel (PHICH).

In this embodiment, the PCFICH and PHICH are defined as channels included in the PDCCHs. In other embodiments, the PCFICH and PHICH may be defined as physical channels being provided separately from and in parallel with the PDCCH.

For uplinks, a physical uplink shared channel (PUSCH) shared among the mobile stations 100ₙ and a physical uplink control channel are used. User data is transmitted over the physical uplink shared channel. Also, downlink quality information, such as a channel quality indicator (CQI), used for scheduling operations and adaptive modulation and coding (AMC) for physical downlink shared channels, and acknowledgement information for the physical downlink shared channel are transmitted over the physical uplink control channel. The acknowledgment information may be represented as a positive response (ACK) indicative of successful reception of transmitted signals or a negative response (NACK) indicative of unsuccessful reception of the transmitted signals.

In addition to the CQI and the acknowledgement information, a scheduling request for resource assignment for uplink shared channels, a release request for persistent scheduling and others may be transmitted over the physical uplink control channel. In this embodiment, the resource assignment for the uplink shared channels means that a base station apparatus uses an uplink scheduling grant within a physical downlink control channel in a certain subframe to inform a mobile station that the mobile station may conduct communications over an uplink shared channel in a subsequent subframe.

In this embodiment, the above-mentioned user data may be IP packets in accordance with web browsing, FTP and VoIP, for example, or may be control signals for radio resource control (RRC). Also, the user data may be referred to as an UL-SCH for transport channels and referred to as a dedicated traffic channel (DTCH) or a dedicated control channel (DCCH) for logical channels, for example.

The uplink scheduling grant for normal user data, that is, user data to which a best effort type scheduling scheme for higher efficiency is applied by dynamically assigning radio resources is described below.

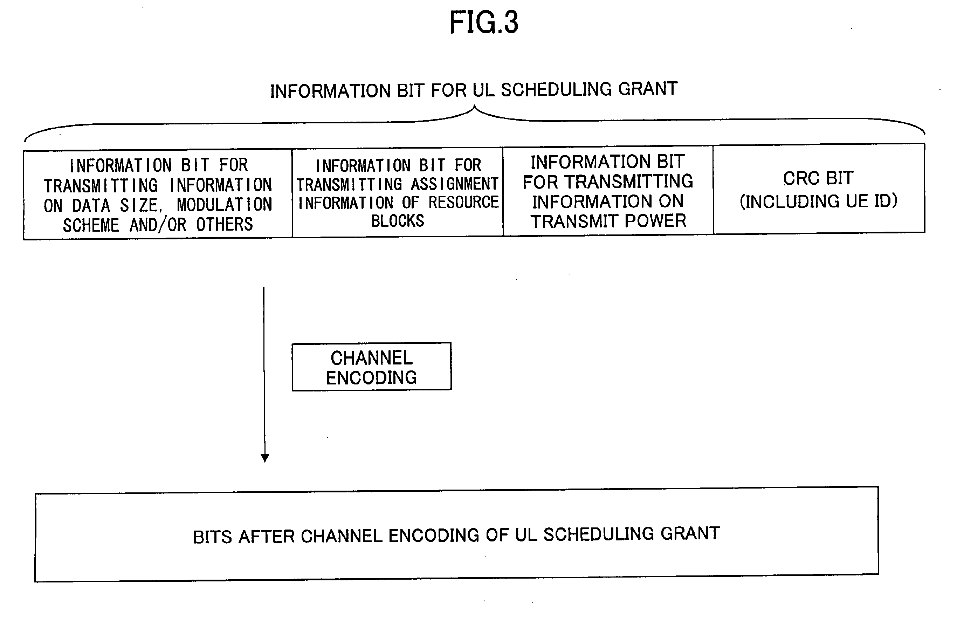

FIG. 3 illustrates an exemplary arrangement of information bits for the uplink scheduling grant and an exemplary channel coding method.

The uplink scheduling grant includes information bits for transmitting information regarding a data size, a modulation scheme and others, information bits for transmitting assignment information of resource blocks, and information bits for transmitting transmit power information and CRC bits. An ID for a mobile station or UE is masked in the CRC bits. Thus, the UE ID information including an ID for a user communicating over an uplink shared channel would be included in the CRC bits. The above-mentioned arrangement is simply illustrative and may include other information bits or may not partially include the above information bits. The information bits in the uplink scheduling grant may be channel encoded. The channel encoding may be implemented as convolution encoding or turbo encoding. The channel encoded bits for the uplink scheduling grant are mapped into a predefined subcarrier in a physical downlink control channel. In general, multiple mobile stations transmit uplink shared channels in one subframe, and thus multiple uplink scheduling grants are provided. Thus, the uplink scheduling grants are multiplexed in the subcarrier for mapping the uplink scheduling grants over the physical downlink control channel. The multiplexing method may be any of frequency multiplexing, code multiplexing and time multiplexing. Also, the multiplexing method may be a combination of the frequency multiplexing, the code multiplexing and the time multiplexing. In the above-mentioned embodiment, the multiplexing is performed after channel coding of a single uplink scheduling grant. In other embodiments, multiple uplink scheduling grants may be channel encoded together, and then the channel encoded uplink scheduling grants may be mapped into a subcarrier.

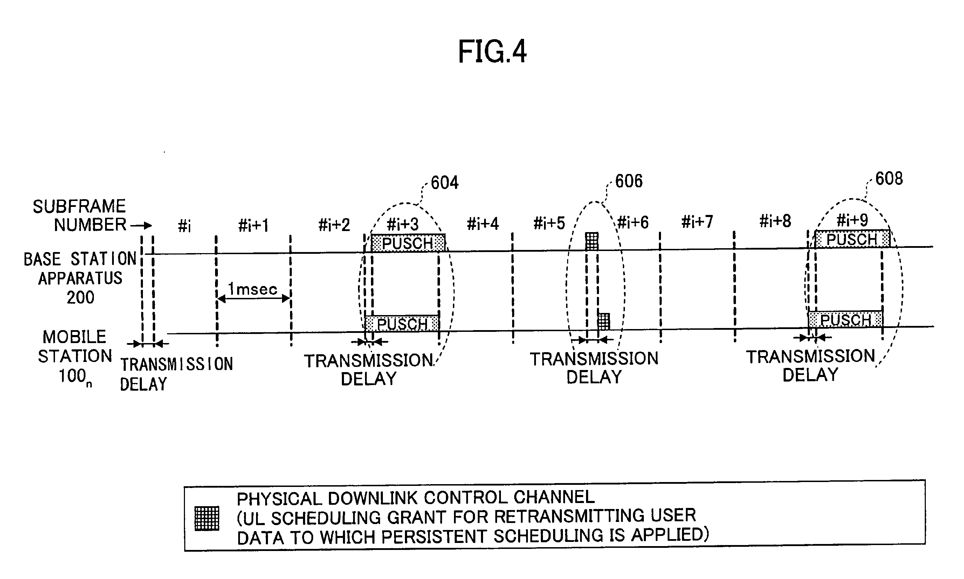

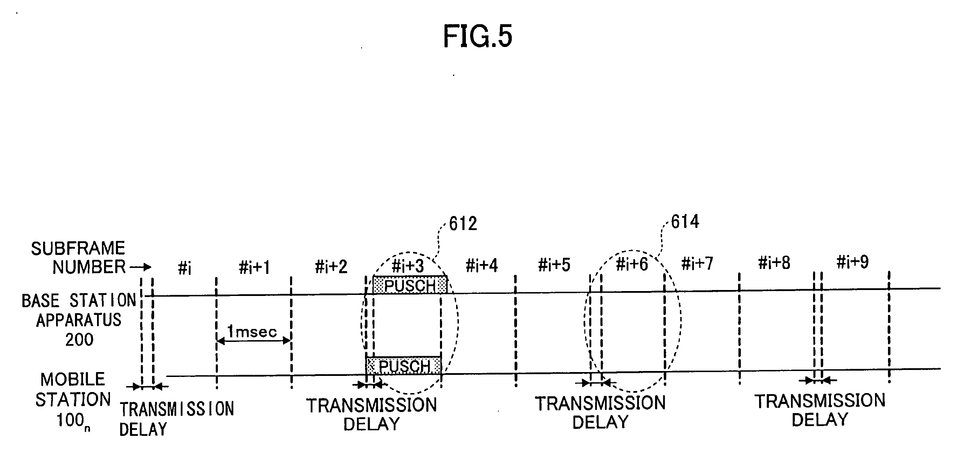

An exemplary HARQ application method for persistent scheduling applied user data is described with reference to FIGS. 4 and 5. Persistent scheduling is a scheduling method of assigning radio resources for each constant period.

In this embodiment, as illustrated in FIG. 4, if a decoding result (CRC check result) of initially transmitted persistent scheduling applied user data is unsuccessful (NG) in uplinks, the base station apparatus 200 transmits an uplink scheduling grant for retransmitting the persistent scheduling applied user data to the relevant mobile station 100ₙ over a physical downlink control channel at a predefined timing.

On the other hand, as illustrated in FIG. 5, if the decoding result (CRC check result) of the initially transmitted persistent scheduling applied user data is successful (OK) in uplinks, the base station apparatus 200 does not transmit acknowledgement information to the relevant mobile station 100ₙ, that is, does not transmit any of the acknowledgement information and the uplink scheduling grant.

The HARQ operation for the persistent scheduling applied user data is described in detail below.

First, the case where the decoding result of the initially transmitted persistent scheduling applied user data is unsuccessful is described with reference to FIG. 4.

At 604, the mobile station 100ₙ transmits the persistent scheduling applied user data at a predefined timing (subframe #i+3) based on predefined transport format information, that is, based on a data size and a modulation scheme, assignment information of uplink resource blocks, transmit power information for uplink shared channels and others.

The base station apparatus 200 receives and decodes the persistent scheduling applied user data.

If the decoding result (CRC check result) of the persistent scheduling applied user data is unsuccessful (NG), at 606, the base station apparatus 200 transmit to the mobile station 100ₙ an uplink scheduling grant for retransmitting the persistent scheduling applied user data over a physical downlink control channel at a predefined timing (subframe #i+6).

At 606, the mobile station 100ₙ receives the uplink scheduling grant for retransmitting the persistent scheduling applied user data.

At 608, the mobile station 100ₙ retransmits the persistent scheduling applied user data at a predefined timing (subframe #i+9) in response to the received uplink scheduling grant for retransmitting the persistent scheduling applied user data.

The base station apparatus 200 receives and decodes the persistent scheduling applied user data.

Since the uplink scheduling grant transmitted at the second time is mapped into a physical downlink control channel, acknowledgement information for the persistent scheduling applied user data as transmitted at the second and subsequent times, that is, ACK or NACK, may be transmitted as acknowledgement information for the physical downlink control channel similar to the HARQ for normal user data.

Note that the normal user data means user data to which a best effort type scheduling scheme for higher efficiency is applied through dynamic assignment of radio resources. Alternatively, similar to the initially transmitted persistent scheduling applied user data, if a decoding result of the persistent scheduling applied user data as transmitted at the second and subsequent times is unsuccessful (NG), the uplink scheduling grant for the physical downlink control channel may be transmitted. Alternatively, both of the acknowledgement information for the physical downlink control channel and the uplink scheduling grant for the physical downlink control channel may be transmitted for the persistent scheduling applied user data as transmitted at the second and subsequent times.

Next, the case where the decoding result of the initially transmitted persistent scheduling applied user data is successful is described with reference to FIG. 5.

At 612, the mobile station 100ₙ transmits the persistent scheduling applied user data at a predefined timing (subframe #i+3) based on predefined transport format information, that is, based on a data size and a modulation scheme, assignment information of uplink resource blocks, transmit power information for uplink shared channels and others.

The base station apparatus 200 receives and decodes the persistent scheduling applied user data.

If a decoding result (CRC check result) of the persistent scheduling applied user data is successful (OK), at 614, the base station apparatus 200 does not transmit acknowledgement information for the persistent scheduling applied user data to the mobile station 100ₙ at a predefined timing (subframe #i+6). On the other hand, since the uplink scheduling grant for retransmitting the persistent scheduling applied user data mapped into the physical downlink control channel is not transmitted from the base station apparatus 200 at the predefined timing (subframe #i+6), the mobile station 100ₙ determines that the persistent scheduling applied user data has been successfully decoded, that is, determines that the decoding result is successful (OK).

In other embodiments, if the uplink scheduling grant for retransmissions is not received from the base station apparatus 200 at the predefined timing (subframe #i+6), the mobile station 100ₙ may discard the persistent scheduling applied user data. Alternatively, the retransmissions of the user data may be temporarily stopped, and the user data may be retained until a new transmission is assigned in a HARQ process for the user data or a HARQ transmit timing for the user data. In this case, if an uplink scheduling grant for instructing the retransmission is received before the assignment of the new transmission in the HARQ process for the user data or the HARQ transmit timing for the user data, the retained user data may be retransmitted.

For uplinks in the LTE (E-UTRA), the HARQ corresponds to synchronous HARQ, and thus the HARQ process is almost equivalent to the HARQ transmit timing.

In the above case where the decoding result (CRC check result) of the persistent scheduling applied user data is unsuccessful in 604 in FIG. 4, even if the base station apparatus 200 transmits to the mobile station 100ₙ the uplink scheduling grant for retransmitting the persistent scheduling applied user data at the predefined timing (subframe #i+6) in the physical downlink control channel, there is a likelihood that the mobile station 100ₙ cannot decode the uplink scheduling grant successfully. At this time, the mobile station 100ₙ may operate similar to 614 and accordingly does not transmit the persistent scheduling applied user data (does not perform operations for 608). In this case, the base station apparatus 200 expects that the persistent scheduling applied user data may be retransmitted from the mobile station 100ₙ while the mobile station 100ₙ does not transmit the persistent scheduling applied user data to the base station apparatus 200, resulting in inconsistency.

For this problem, the base station apparatus 200 may set transmit power for the uplink scheduling grant for retransmitting the persistent scheduling applied user data to a power level higher than a usual level in order to reduce the likelihood that the uplink scheduling grant cannot be decoded at the mobile station 100ₙ as stated above.

Alternatively, for the problem, if the base station apparatus 200 has transmitted the uplink scheduling grant for retransmitting the persistent scheduling applied user data but the mobile station 100ₙ has not retransmitted the persistent scheduling applied user data, the base station apparatus 200 may determine that the persistent scheduling applied user data may not be retransmitted from the mobile station 100ₙ. In this case, the base station apparatus 200 may make power determination for a PUSCH into which the persistent scheduling applied user data transmitted from the mobile station 100ₙ at a predefined subframe is mapped. If the result of the power determination is negative (NG), the base station apparatus 200 may determine that the persistent scheduling applied user data may not be retransmitted from the mobile station 100ₙ. In the power determination, for example, a SIR for PUSCH demodulation reference signals or data signals is measured, and it is determined whether the PUSCH has been actually transmitted based on comparison between the measured SIR and a predefined threshold. For example, if the SIR is higher than the predefined threshold, the power determination is positive, that is, it may be determined that the PUSCH has been actually transmitted. On the other hand, if the SIR is not higher than the predefined threshold, the power determination is negative, that is, it may be determined that the PUSCH has not been actually transmitted. In this case, the base station apparatus 200 could assign radio resources for the persistent scheduling applied user data transmitted from the mobile station 100ₙ, such as frequency resources or resource blocks, to other mobile stations.

Alternatively, the base station apparatus 200 makes the power determination for the PUSCH into which the persistent scheduling applied user data transmitted from the mobile station 100ₙ at a predefined subframe is mapped. If the result of the power determination is negative, the base station apparatus 200 may instruct the mobile station 100ₙ to retransmit the user data at the next HARQ transmit timing. In this case, it is presumed that the mobile station 100ₙ must retain in a transmit buffer the user data of which retransmissions are stopped.

In general, an upper limit value is set for the number of uplink scheduling grants within one subframe in a physical downlink control channel. As a result, if 606 includes many uplink scheduling grants for retransmitting the persistent scheduling applied user data, there is a likelihood that all the uplink scheduling grants for retransmitting the persistent scheduling applied user data cannot be transmitted. In this case, for example, the base station apparatus 200 may not transmit some of the uplink scheduling grants for retransmitting the persistent scheduling applied user data. Alternatively, the base station apparatus 200 may transmit some of the uplink scheduling grants for retransmitting the persistent scheduling applied user data in subsequent subframes such as the next subframe. Then, the mobile station 100ₙ may attempt to receive the uplink scheduling grant for the persistent scheduling applied user data inclusive of the subsequent subframes.

In this manner, in the initial transmission where no uplink scheduling grant is transmitted in a physical downlink control channel, acknowledgment information is not transmitted for ACK while an uplink scheduling grant is transmitted in the physical downlink control channel for NACK. According to this transmission scheme, more efficient and less overhead HARQ for the persistent scheduling applied user data can be implemented.

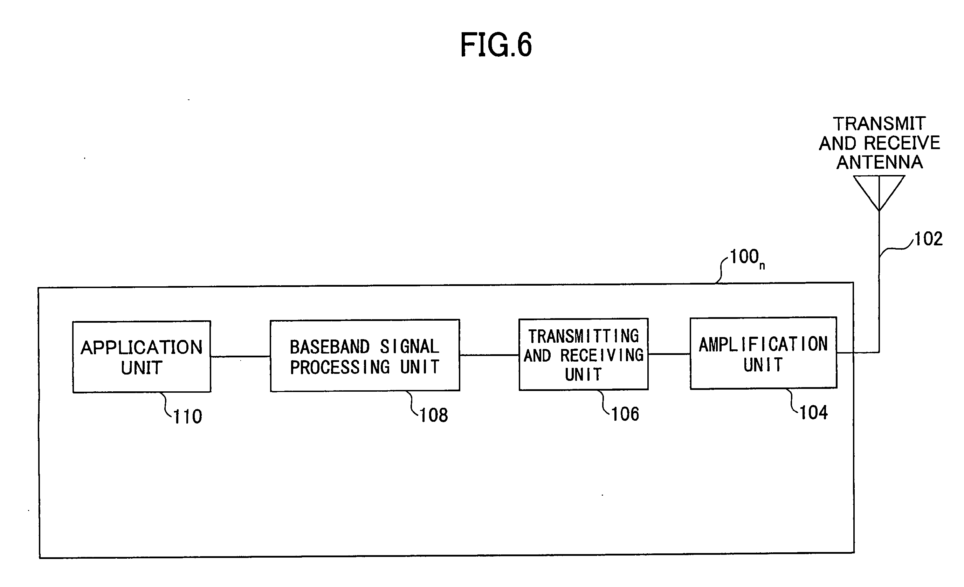

The mobile station 100ₙ according to one embodiment of the present invention is described with reference to FIG. 6.

As illustrated, the mobile station 100ₙ includes a transmit and receive antenna 102, an amplification unit 104, a transmitting and receiving unit 106, a baseband signal processing unit 108 and an application unit 110.

For downlink data, a radio frequency signal received at the transmit and receive antenna 102 is amplified at the amplification unit 104 and frequency converted at the transmitting and receiving unit 106 into a baseband signal. The baseband signal is subjected to FFT operation, error correction decoding and reception operations for retransmission control at the baseband signal processing unit 108. Downlink user data within the downlink data is forwarded to the application unit 110. The application unit 110 performs operations for an upper layer from a physical layer and a MAC layer.

On the other hand, uplink user data is supplied from the application unit 110 to the baseband signal processing unit 108. The baseband signal processing unit 108 performs transmission operations for retransmission control (H-ARQ (Hybrid ARQ)), channel encoding, DFT operations and IFFT operations, and supplies the resulting signal to the transmitting and receiving unit 106. The transmitting and receiving unit 106 frequency converts the baseband signal supplied from the baseband signal processing unit 108 into a radio frequency band, which is amplified at the amplification unit 104 and transmitted from the transmit and receive antenna 102.

The HARQ operations at a mobile station for persistent scheduling applied user data described in conjunction with FIGS. 4 and 5 according to this embodiment are performed at the baseband signal processing unit 108 illustrated in FIG. 6. Specifically, the baseband signal processing unit 108 includes a transmitting unit for transmitting the persistent scheduling applied user data as the first signal to the base station apparatus 200, a retransmitting unit for retransmitting the persistent scheduling applied user data in response to receipt of an uplink scheduling grant mapped into a downlink control channel as a control signal for retransmitting the persistent scheduling applied user data from the base station apparatus, and a receiving unit for receiving acknowledgement information for the persistent scheduling applied user data in response to retransmission of the persistent scheduling applied user data to the base station apparatus. In this embodiment, the uplink scheduling grant is a signal indicative of at least one of assignment information of uplink resource blocks, identification information for a user (mobile station), a data size, a modulation scheme and transmit power. Also, if the baseband signal processing unit 108 does not receive the uplink scheduling grant mapped into the downlink control channel as a control signal for retransmitting the persistent scheduling applied user data, the baseband signal processing unit determines that the persistent scheduling applied user data has been successfully received.

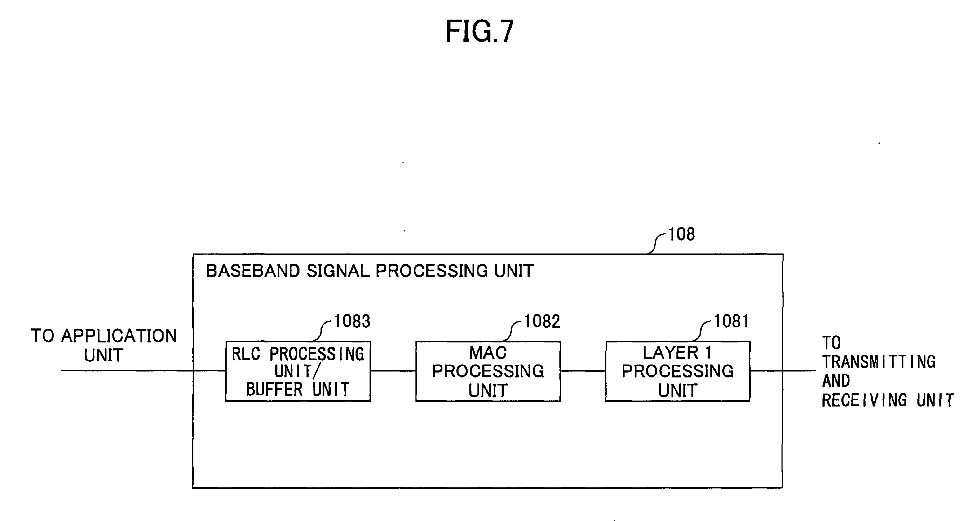

Specifically, the baseband signal processing unit 108 includes a layer 1 processing unit 1081, a MAC (Medium Access Control) processing unit 1082 and a RLC (Radio Link Control) processing unit/buffer unit 1083 as illustrated in FIG. 7.

The layer 1 processing unit 1081 performs channel decoding and FFT operations on received downlink signals. Also, the layer 1 processing unit 1081 demodulates and decodes a physical downlink control channel in the received downlink signals and transmits the decoding result to the MAC processing unit 1082. Specifically, the layer 1 processing unit 1081 demodulates and decodes downlink scheduling information, an uplink scheduling grant and acknowledgement information (ACK/NACK) in the physical downlink control channel, and transmits the decoding result to the MAC processing unit 1082.

Furthermore, if the persistent scheduling applied user data is transmitted in uplinks at a relevant subframe, the layer 1 processing unit 1081 receives the persistent scheduling applied user data from the MAC processing unit 1082. Then, the layer 1 processing unit 1081 performs encoding, data modulation, DFT operations, subcarrier mapping operations and IFFT operations on the persistent scheduling applied user data, and supplies the resulting signal as a baseband signal to the transmitting and receiving unit 106.

The MAC processing unit 1082 receives encoded downlink scheduling information, an uplink scheduling grant and acknowledgement information (ACK/NACK) from the layer 1 processing unit 1081.

The MAC processing unit 1082 performs transmission operations to transmit the persistent scheduling applied user data as the first signal to the base station apparatus 200 in a transmit timing predefined for the persistent scheduling applied user data. Specifically, the MAC processing unit 1082 determines a transport format, transmit power, frequency resources used for transmission, that is, uplink resource blocks and others for the persistent scheduling applied user data in a data buffer in the mobile station 100ₙ, and supplies the persistent scheduling applied user data to the layer 1 processing unit 1081. The data buffer within the mobile station 100ₙ may be a persistent scheduling applied data buffer within the RLC processing unit/buffer unit 1083, for example. In this case, the MAC processing unit 1082 receives the persistent scheduling applied user data from the data buffer in the RLC processing unit/buffer unit 1083, and performs the above-mentioned transmission operations. Note that the data buffer may be provided within the MAC processing unit 1082 rather than the RLC processing unit/buffer unit 1083. Also, if the MAC processing unit 1082 receives an uplink scheduling grant mapped into a downlink control channel as a control signal for retransmitting the persistent scheduling applied user data from the layer 1 processing unit 1081, the MAC processing unit 1082 performs transmission operations to retransmit the relevant persistent scheduling applied user data. Furthermore, if the MAC processing unit 1082 retransmits the persistent scheduling applied user data to the base station apparatus, the MAC processing unit 1082 receives acknowledgement information for the persistent scheduling applied user data at a predefined timing. In this embodiment, the uplink scheduling grant may be a signal indicative of at least one of assignment information of uplink resource blocks, identification information for a user (mobile station), a data size, a modulation scheme and transmit power. Also, if the MAC processing unit 1082 does not receive the uplink scheduling grant mapped into a downlink control channel as a control signal for retransmitting the above persistent scheduling applied user data initially transmitted, the MAC processing unit 1082 determines that the persistent scheduling applied user data has been successfully received.

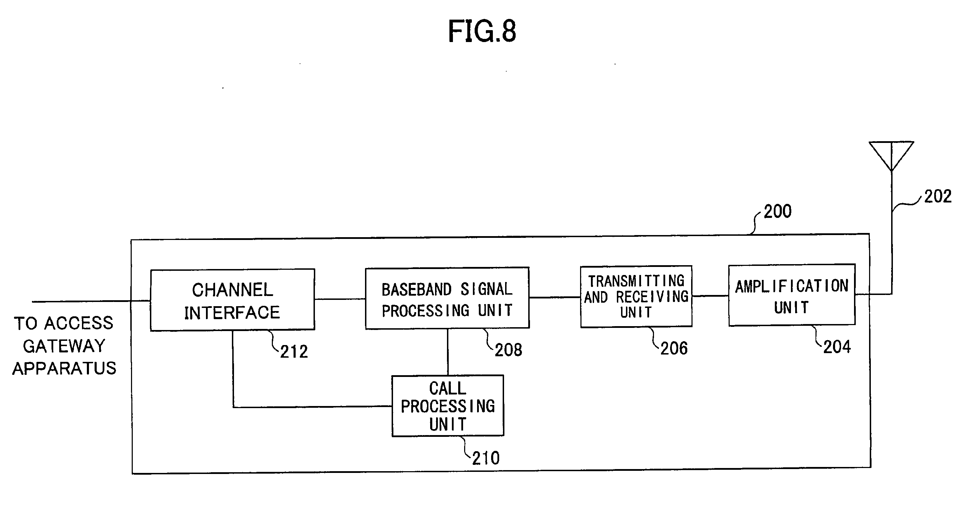

Next, the base station apparatus 200 according to this embodiment is described with reference to FIG. 8.

In this embodiment, the base station apparatus 200 includes a transmit and receive antenna 202, an amplification unit 204, a transmitting and receiving unit 206, a baseband signal processing unit 208, a call processing unit 210 and a channel interface 212.

User data transmitted from the base station apparatus 200 to the mobile station 100ₙ in downlinks is supplied from an upper station of the base station apparatus 200 such as the access gateway apparatus 300 to the baseband signal processing unit 208 via the channel interface 212.

The baseband signal processing unit 208 performs data segmentation and concatenation, RLC layer transmission operations such as transmission operations for RLC retransmission control, transmission operations for MAC retransmission control such as HARQ (Hybrid Automatic Repeat reQuest) transmission operations, scheduling, transport format selection, channel encoding and IFFT (Inverse Fast Fourier Transform) operations and forwards the resulting signal to the transmitting and receiving unit 206. Also, the baseband signal processing unit 208 performs transmission operations such as channel encoding and IFFT operations on signals in a physical downlink control channel being a downlink control channel and forwards the resulting signal to the transmitting and receiving unit 206.

The transmitting and receiving unit 206 frequency converts a baseband signal supplied from the baseband signal processing unit 208 into a radio frequency band. The converted signal is amplified at the amplification unit 204 and transmitted from the transmit and receive antenna 202.

On the other hand, for user data transmitted from the mobile station 100ₙ to the base station apparatus 200 in uplinks, a radio frequency signal received at the transmit and receive antenna 202 is amplified at the amplification unit 204 and frequency converted at the transmitting and receiving unit 206 into a baseband signal, which is supplied to the baseband signal processing unit 208.

The baseband signal processing unit 208 performs FFT operations, IDFT operations, error correction decoding, reception operations for MAC retransmission control and RLC layer reception operations on user data included in the incoming baseband signal and forwards the resulting signal to the access gateway apparatus 300 via the channel interface 212.

The HARQ operations at the base station apparatus 200 for the persistent scheduling applied user data according to this embodiment as described with reference to FIGS. 4 and 5 are performed at the baseband signal processing unit 208 illustrated in FIG. 8. Specifically, the baseband signal processing unit 208 includes a decoding unit for decoding the persistent scheduling applied user data as the first signal and a transmitting unit for transmitting to the mobile station 100ₙ an uplink scheduling grant mapped into a downlink control channel as a control signal for retransmitting the persistent scheduling applied user data based on a decoding result of the persistent scheduling applied user data if the persistent scheduling applied user data has not been successfully received. Also, the transmitting unit transmits acknowledgement information for the retransmitted persistent scheduling applied user data to the mobile station. The uplink scheduling grant may be a signal indicative of at least one of assignment information of uplink frequency resources, identification information for a user (mobile station), a data size, a modulation scheme and transmit power.

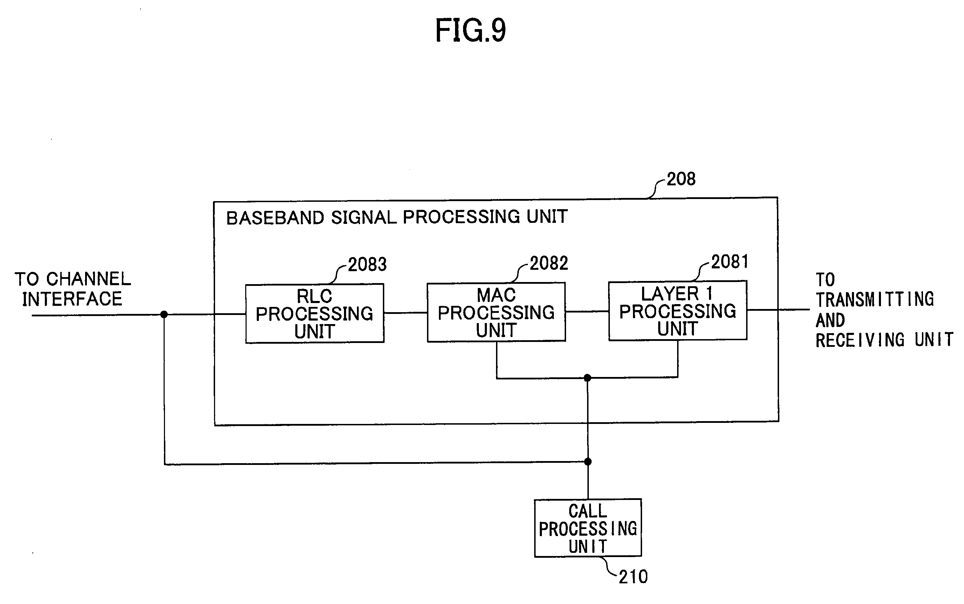

Specifically, the baseband signal processing unit 208 includes a layer 1 processing unit 2081, a MAC processing unit 2082 and a RLC processing unit 2083 as illustrated in FIG. 9.

The layer 1 processing unit 2081 performs channel encoding and IFFT operations on transmitted downlink data, channel decoding and IDFT operations on transmitted uplink data and FFT operations. The layer 1 processing unit 2081 performs demodulation and decoding operations such as channel decoding, IDFT operations and FFT operations on the persistent scheduling applied user data as the first signal at a predefined receive timing for the persistent scheduling applied user data and transmits the processed user data to the MAC processing unit 2082.

The layer 1 processing unit 2081 receives from the MAC processing unit 2082 an ID for a user communicating over a physical downlink shared channel and transport format information for that user data, that is, downlink scheduling information, as well as an ID for a user communicating over a physical uplink shared channel and transport format information for that user data, that is, an uplink scheduling grant, and acknowledgement information (ACK/NACK). Also, the layer 1 processing unit 2081 performs transmission operations such as channel encoding and IFFT operations on an ID for a user communicating over a physical downlink shared channel and transport format information for that user data, that is, downlink scheduling information, as well as an ID for a user communicating over a physical uplink shared channel and transport format information for that user data, that is, an uplink scheduling grant, and acknowledgement information (ACK/NACK). An ID for a user communicating over a physical downlink shared channel and transport format information for that user data, that is, downlink scheduling information, as well as an ID for a user communicating over a physical uplink shared channel and transport format information for that user data, that is, an uplink scheduling grant, and acknowledgement information (ACK/NACK) are mapped into a physical downlink control channel being a downlink control channel.

Also, the layer 1 processing unit 2081 demodulates and decodes a CQI and the acknowledgment information mapped into the physical uplink control channel transmitted in uplink and transmits the decoding result to the MAC processing unit 2082.

The MAC processing unit 2082 performs MAC retransmission control for normal downlink user data such as HARQ transmission operations, scheduling operations, selection among transport formats and assignment of frequency resources. The normal user data means user data to which a best effort type scheduling scheme for higher efficiency is applied through dynamic assignment of radio resources. The scheduling operations mean selection among mobile stations that are allowed to receive user data at relevant subframes in downlink shared channels. Also, the selection among transport formats means that a modulation scheme, a coding rate and a data size are determined for the user data received at the mobile stations determined in the scheduling operations. The determination of the modulation scheme, the coding rate and the data size may be made based on the CQI reported from the mobile stations in uplinks, for example. In addition, the assignment of radio resources means to determine which resource blocks are to be used for the user data to be received at the mobile stations determined in the scheduling operations. The determination of resource blocks may be made based on the CQI reported from the mobile stations in uplinks, for example. The CQI reported from the mobile station is indicated from the layer 1 processing unit 2081. Then, the MAC processing unit 2082 transmits an ID for a communicating user and transport format information for that user data, that is, downlink scheduling information, to the layer 1 processing unit 2081. That user data is a physical downlink shared channel determined in the above-mentioned scheduling operations, the transport format selection operations and the frequency resource assignment operations to transmit.

Also, the MAC processing unit 2082 performs reception operations for MAC retransmission control for normal uplink user data, scheduling operations, selection among transport formats and assignment of frequency resources. The normal user data means user data to which a best effort type of scheduling scheme for higher efficiency is applied through dynamic assignment of radio resources. The scheduling operations mean selection of mobile stations using a shared channel at a predefined subframe to transmit user data. Also, the transport format selection operations mean that a modulation scheme, a coding rate and a data size are determined for the user data transmitted from the mobile stations determined in the scheduling operations. The determination of the modulation scheme, the coding rate and the data size may be made based on a SIR for uplink sounding reference signals transmitted from the mobile stations or a path loss between the mobile stations and the base station apparatus. In addition, the frequency resource assignment operations mean to determine which resource blocks are used for transmission of user data by the mobile stations determined in the scheduling operations. The determination of resource blocks may be made based on the SIR for uplink sounding reference signals transmitted from the mobile stations, for example. Then, the MAC processing unit 2082 transmits an ID for a communicating user and transport format information for that user data, that is, an uplink scheduling grant, to the layer 1 processing unit 2081. That user data is a physical uplink shared channel determined in the above-mentioned scheduling operations, the transport format selection operations and the frequency resource assignment operations to transmit.

The HARQ operations at the base station apparatus 200 for the persistent scheduling applied user data as described in conjunction with FIGS. 4 and 5 according to this embodiment are performed at the MAC processing unit 2082 illustrated in FIG. 9. Specifically, the MAC processing unit 2082 receives the persistent scheduling applied user data from the later 1 processing unit 2081 as the first signal after demodulation and decoding at a receive timing predefined for the persistent scheduling applied user data. Then, if it is determined based on a decoding result of the persistent scheduling applied user data that the user data has not been successfully received, the MAC processing unit 2082 generates an uplink scheduling grant mapped into a downlink control channel as a control signal for retransmitting the persistent scheduling applied user data and transmits the uplink scheduling grant to the layer 1 processing unit 2081. Also, the MAC processing unit 2082 transmits acknowledgement information (ACK/NACK) for the retransmitted persistent scheduling applied user data to the layer 1 processing unit 2081. In this embodiment, the uplink scheduling grant is a signal indicative of at least one of assignment information of uplink frequency resources, identification information for a user (mobile station), a data size, a modulation scheme and transmit power.

The RLC processing unit 2083 performs segmentation and concatenation for downlink packet data, RLC layer transmission operations such as transmission operations for RLC retransmission control, segmentation and concatenation for uplink data, and RLC layer reception operations such as reception operations for RLC retransmission control.

The call processing unit 210 performs calling operations such as establishment and release of communication channels, state management for the base station apparatus 200, and radio resource management.

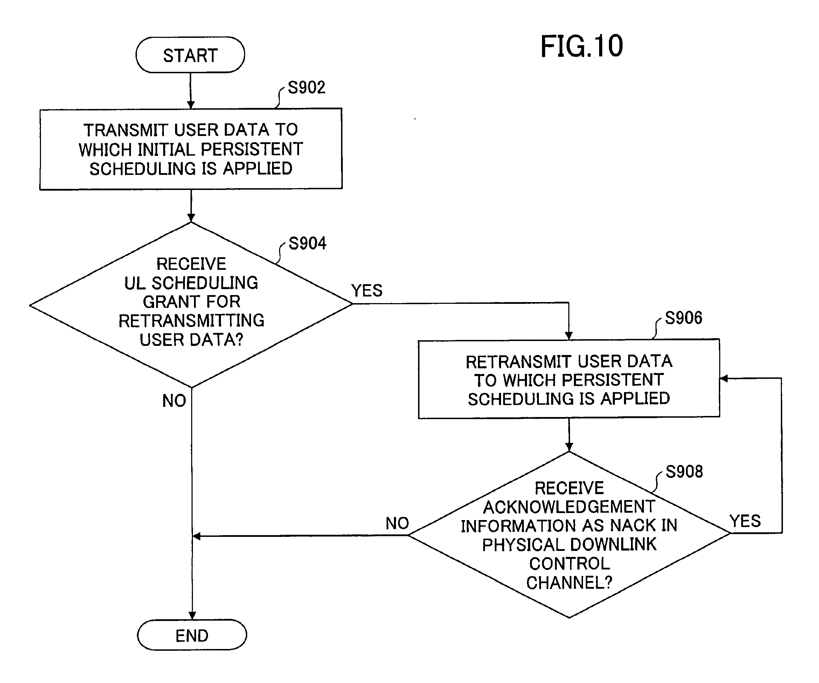

An exemplary communication control method used in a mobile station according to this embodiment is described with reference to FIG. 10.

At step S902, the mobile station 100ₙ transmits persistent scheduling applied user data as the first signal to the base station apparatus 200 at a transmit timing predefined for the user data (subframe #i+3 in FIGS. 4 and 5).

At step S904, the mobile station 100ₙ determines whether to receive an uplink scheduling grant for retransmitting the persistent scheduling applied user data as transmitted at step S902.

Specifically, at step S904, the mobile station 100ₙ attempts to receive the uplink scheduling grant for retransmitting the persistent scheduling applied user data at a predefined timing (subframe #i+6 in FIGS. 4 and 5) and determines whether it has received the uplink scheduling grant. In this embodiment, the reception of the uplink scheduling grant in the physical downlink control channel may correspond to successful decoding of the uplink scheduling grant in the physical downlink control channel, that is, a CRC check result being positive (OK).

If the mobile station 100ₙ has received the uplink scheduling grant in the physical downlink control channel (S904: YES), the mobile station 100ₙ retransmits the persistent scheduling applied user data based on the uplink scheduling grant at step S906.

At step S908, the mobile station 100ₙ determines whether acknowledgement information for the retransmitted user data is ACK or NACK at a predefined timing. In other words, the mobile station 100ₙ determines whether the NACK is received as the acknowledgement information for the retransmitted user data in the physical downlink control channel. As stated above, in this embodiment, the mobile station 100ₙ determines whether a decoding result of the retransmitted user data is unsuccessful (NG) based on the determination as to whether the acknowledgement information is NACK in the physical downlink control channel at step S908. In other embodiments, the mobile station 100ₙ may instead determine whether the decoding result of the retransmitted user data may be unsuccessful (NG) based on determination as to whether the uplink scheduling grant has been received in the physical downlink control channel similar to the initially transmitted persistent scheduling applied user data. Alternatively, the mobile station may determine whether the decoding result of the retransmitted user data is unsuccessful based on both the determination as to whether the acknowledgment information corresponds to NG in the physical downlink control channel and the determination as to whether the uplink scheduling grant has been received in the physical downlink control channel.

If the NACK has been received as the acknowledgement information in the physical downlink control channel (S908: YES), the process control returns to step S906 where the mobile station 100ₙ retransmits the persistent scheduling user data. The retransmissions of the persistent scheduling applied user data at step S906 are iterated until the ACK is received as the acknowledgement information in the physical downlink control channel or until the number of retransmissions of the persistent scheduling applied user data reaches a maximum.

On the other hand, if the uplink scheduling grant is not received in the physical downlink control channel (S904: NO) or if the NACK has not been received as the acknowledgement information in the physical downlink control channel, that is, if the ACK has been received (S908: NO), the method ends.

In other embodiments, if the uplink scheduling grant is not received in the physical downlink control channel (S904: NO) or if the NACK has not been received as the acknowledgement information in the physical downlink control channel, that is, if the ACK has been received (S908: NO), the mobile station 100ₙ may stop the retransmissions of the user data and retain the user data in the HARQ process for the user data or at a HARQ transmit timing for the user data until a new transmission is assigned. In this case, if the mobile station 100ₙ receives the uplink scheduling grant for instructing retransmissions before the assignment of new transmission in the HARQ process for the user data or at the HARQ transmit timing for the user data, the mobile station 100ₙ may retransmit the retained user data.

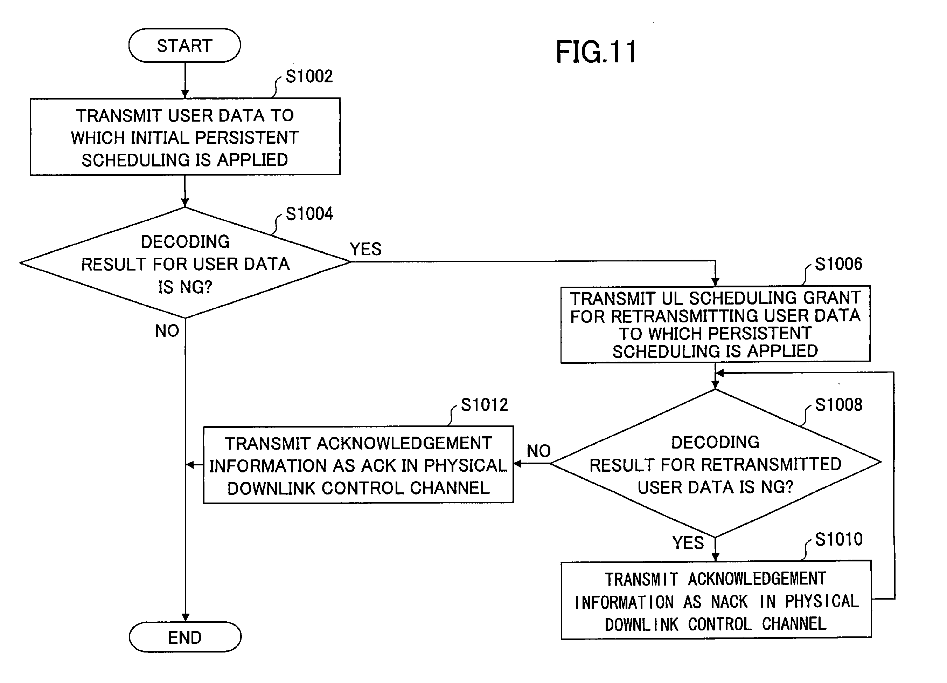

An exemplary communication control method at the base station apparatus according to this embodiment is described with reference to FIG. 11.

The base station apparatus 200 attempts to receive persistent scheduling applied user data initially transmitted from the mobile station 100ₙ at a receive timing predefined for the persistent scheduling applied user data (subframe #i+3 in FIGS. 4 and 5) at step S1002 and determines whether a decoding result of the user data is unsuccessful (NG) at step S1004.

If the decoding result of the initially transmitted user data is unsuccessful (S1004: YES), the base station apparatus 200 transmits an uplink scheduling grant for retransmitting the persistent scheduling applied user data in a physical downlink control channel at a predefined timing (subframe #i+6 in FIGS. 4 and 5) to the mobile station 100ₙ at step S1006.

Then, the base station apparatus 200 attempts to receive the retransmitted persistent scheduling applied user data at a predefined timing (subframe #i+9 in FIG. 4) and determines whether a decoding result of the retransmitted user data is unsuccessful (NG) at step S1008.

If the decoding result of the retransmitted user data is unsuccessful (S1008: YES), the base station apparatus 200 transmits NACK as acknowledgement information to the mobile station 100ₙ at a predefined timing in the physical downlink control channel at step S1010. In this embodiment, if the decoding result of the retransmitted user data is unsuccessful, the base station apparatus 200 transmits the NACK as the acknowledgement information to the mobile station 100ₙ in the physical downlink control channel. In other embodiments, the base station apparatus 200 may instead transmit an uplink scheduling grant for retransmitting the persistent scheduling applied user data to the mobile station 100ₙ in the physical downlink control channel similar to the initially transmitted user data. Alternatively, if the decoding result of the retransmitted user data is unsuccessful, the base station apparatus 200 may transmit both the NACK as the acknowledgement information and the uplink scheduling grant for retransmitting the persistent scheduling applied user data in the physical downlink control channel.

After step S1010, the base station apparatus 200 returns to step S1008. Specifically, the base station apparatus 200 attempts to receive the retransmitted persistent scheduling applied user data at a predefined timing and determines whether a decoding result of the retransmitted user data is unsuccessful (NG) at step S1008. The steps S1008 and S1010 are iterated until it is determined that the decoding result for the retransmitted user data is not unsuccessful at step S1008 or until the number of retransmissions of the persistent scheduling applied user data reaches a maximum.

On the other hand, if the decoding result of the retransmitted user data is not unsuccessful (S1008: NO), the base station apparatus 200 transmits ACK as the acknowledgement information to the mobile station 100ₙ in the physical downlink control channel at a predefined timing at step S1012.

Also, if the decoding result of the initially transmitted user data is not unsuccessful (S1004: NO) or after step S1012, the method ends.

According to the embodiments, a base station apparatus, a mobile station, a radio communication system and a communication control method that can perform HARQ operations on persistent scheduling applied user data efficiently are achieved.

In the above-mentioned embodiments, the round trip time in the HARQ is set to 6 ms, but the mobile station, the base station apparatus, the radio communication system and the communication control method according to the present invention are applicable to cases other than the case of the round trip time in the HARQ being equal to 6 ms.

In the above-mentioned embodiments, Evolved UTRA and UTRAN (also called Long Term Evolution or Super 3G) based systems have been described, but the mobile station, the base station apparatus, the radio communication system and the communication control method according to the present invention are applicable to any other systems communicating over shared channels.

This international patent application is based on Japanese Priority Application No. 2007-071594 filed on March 19, 2007, the entire contents of which are hereby incorporated by reference.

## Claims

1. A base station apparatus in a radio communication system including a mobile station and the base station apparatus communicating with the mobile station, wherein the base station apparatus applies a scheduling scheme for assigning radio resources to mobile stations for each constant period, and wherein the mobile station transmits a first signal to the base station apparatus in accordance with the assignment of the radio resources, the base station apparatus comprising:
a decoding unit configured to decode the first signal; and
a transmitting unit configured to transmit a control signal for retransmitting the first signal to the mobile station if the first signal has not been successfully received.

2. The base station apparatus as claimed in claim 1, wherein the control signal comprises an uplink scheduling grant mapped into a downlink control channel.

3. The base station apparatus as claimed in claim 2, wherein the uplink scheduling grant includes a signal indicative of at least one of assignment information of uplink frequency resources, identification information, a data size, a modulation scheme and transmit power.

4. A mobile station in a radio communication system including the mobile station and a base station apparatus communicating with the mobile station, wherein the base station apparatus applies a scheduling scheme for assigning radio resources to mobile stations for each constant period, the mobile station comprising:
a transmitting unit configured to transmit a first signal to the base station apparatus in accordance with the assignment of the radio resources; and
a retransmitting unit configured to retransmit the first signal if a control signal for retransmitting the first signal is received from the base station apparatus.

5. The mobile station as claimed in claim 4, wherein the control signal comprises an uplink scheduling grant mapped into a downlink control channel.

6. The mobile station as claimed in claim 5, wherein the uplink scheduling grant includes a signal indicative of at least one of assignment information of uplink frequency resources, identification information, a data size, a modulation scheme and transmit power.

7. A radio communication system including a mobile station and a base station apparatus communicating with the mobile station,
wherein the base station apparatus applies a scheduling scheme for assigning radio resources to mobile stations for each constant period,
the mobile station comprising:
a transmitting unit configured to transmit a first signal to the base station apparatus in accordance with the assignment of the radio resources; and
a retransmitting unit configured to retransmit the first signal if a control signal for retransmitting the first signal is received from the base station apparatus, and
the base station apparatus comprising:
a decoding unit configured to decode the first signal; and
a transmitting unit configured to transmit the control signal for retransmitting the first signal to the mobile station if the first signal has not been successfully received.

8. A communication control method for use in a radio communication system including a mobile station and a base station apparatus communicating with the mobile station, wherein the base station apparatus applies a scheduling scheme for assigning radio resources to mobile stations for each constant period, the method comprising:
the mobile station transmitting a first signal to the base station apparatus in accordance with the assignment of the radio resources;
the base station apparatus decoding the first signal;
the base station apparatus transmitting a control signal for retransmitting the first signal to the mobile station if the first signal has not been successfully received; and
the mobile station retransmitting the first signal based on the control signal.
